# FASCICULE DE BREVET EUROPEEN

(11) **EP 1 583 917 B1**
(45) Date de publication et mention de la délivrance du brevet: **24.12.2008**
(21) Numéro de dépôt: 04701621.7
(22) Date de dépôt: 13.01.2004
(51) Int. Cl.: F16J 15/12, F16J 15/08, F16L 23/20

(54) **JOINT D'ETANCHEITE A STRUCTURE INTERNE LAMELLAIRE POUR TRES HAUTES TEMPERATURES**
DICHTUNG MIT LAMINIERTER INNENSTRUKTUR FÜR SEHR HOHE TEMPERATUREN
SEALING JOINT WITH LAMINATED INTERNAL STRUCTURE FOR VERY HIGH TEMPERATURES

(30) Priorité: 16.01.2003 FR 0300441
(43) Date de publication de la demande: 12.10.2005
(73) Titulaire: COMMISSARIAT A L'ENERGIE ATOMIQUE, 75015 Paris (FR); Garlock France SAS, 42000 Saint Etienne Cédex (FR)
(72) Inventeur: CAPLAIN, Philippe, F-26130 SAINT PAUL TROIS CHATEAUX (FR); ROUAUD, Christian, F-07700 BOURG ST ANDEOL (FR); LE GALLO, Patrick, F-38560 JARRIE (FR); LE GUYADEC, Fabienne, F-26130 SAINT PAUL TROIS CHATEAUX (FR); LEFRANCOIS, Michel, F-42000 SAINT ETIENNE (FR); GENTZBITTEL, Jean-Marie, F-38100 seyssinet (FR); LEVOY, Richard, F-26230 REAUVILLE (FR)
(74) Mandataire: Poulin, Gérard
(86) Numéro de dépôt international: PCT/FR2004/050013
(87) Numéro de publication internationale: WO 2004/065826

(56) Documents cités:
- US-A- 3 806 138
- US-A- 4 055 464

## Description

L'invention ressortit à un joint d'étanchéité à structure interne lamellaire pour travailler aux très hautes températures, typiquement de 600 à 1000°C.

Dans le domaine de l'étanchéité statique de brides de tuyauteries ou d'assemblages analogues, susceptibles de subir des chocs de pression ou de température, on utilise très souvent des joints avec ressorts métalliques qui, associés au serrage de brides de métal sur métal, offrent une bonne étanchéité et aussi une grande résistance aux efforts produits par la pression, la dilatation ou des efforts extérieurs.

Ces joints fonctionnent avec un écrasement constant fixé par la profondeur du logement, ou l'épaisseur d'un anneau d'écartement, ménagé entre les portées d'appui des brides. Ils comprennent une âme interne élastique qui permet de développer l'effort de réaction nécessaire à l'étanchéité, et une enveloppe continue appuyée sur les brides et qui réalise l'étanchéité. Les éléments élastiques le plus couramment utilisés dans ce domaine sont le tube ouvert ou fermé, le ressort hélicoïdal à spires jointives ou encore différents profilés en forme de C, de U ou de E.

L'âme doit maintenir l'effort avec le temps dans les conditions de sollicitations mécaniques ou thermiques qui sont spécifiées. Sa capacité d'élasticité détermine souvent les conditions du joint et sa durée de vie. En effet, du fait de l'écrasement constant du joint, il aura tendance à se relaxer avec le temps, exerçant donc un effort de serrage de plus en plus faible. Ce phénomène sera plus manifeste à hautes températures.

Il est possible de réduire la relaxation en réduisant les contraintes mécaniques dans l'âme du joint au moyen d'une division de la structure interne en plusieurs éléments dont chacun est moins sollicité. Certains exemples sont donnés dans les brevets US A 4 901 987 et 5 639 074. Ils consistent en des ressorts ondulés repliés en hélice. Des contacts entre les ondulations de couches successives assurent la raideur du ressort. Toutefois, le mode concret de réalisation de ces ressorts antérieurs n'offre pas une raideur suffisante pour les applications qui nous intéressent ici en raison du caractère continu de l'hélice, et n'ont d'ailleurs pas été conçus pour ces applications d'étanchéité. L'objet essentiel de l'invention est donc de constituer un joint d'étanchéité à élément élastique interne pouvant maintenir ses propriétés élastiques jusqu'à des températures de 600 à 1000°C pendant une durée de vie suffisante. La bonne raideur élastique de ce joint s'accompagne d'une bonne répartition de l'effort dans toute sa structure.

L'invention est définie par les revendications, dont le préambule de la première est construit d'après US-A-4 055 464. Ce brevet antérieur décrit un joint à plaques internes parallèles séparées par une garniture métallique de structure non précisée.

A cet effet, le joint proposé associe une enveloppe métallique externe à une structure interne élastique constituée d'un assemblage de lames venant en contact entre elles par des appuis décalés et fléchissant à l'écrasement global du joint.

Contrairement à ce qu'on observe dans les brevets antérieurs cités, l'élément élastique est composé de lames séparées et superposées qui, en raison du caractère circulaire du joint, sont refermées sur elles-mêmes et possèdent donc une raideur individuelle plus grande que les spires formant une lame unique.

Plusieurs modes de réalisation particuliers de l'invention apparaîtront aux figures :
- les figures 1a et 1b représentent deux variantes d'un même mode de réalisation de l'invention,
- la figure 1c représente le mode de fonctionnement,
- la figure 1d illustre un élément particulier du joint,
- la figure 1e illustre le joint en vue de dessus et en coupe,
- et les figures 2a, 2b, 2c, 2d et 2e illustrent divers genres de lames possibles.

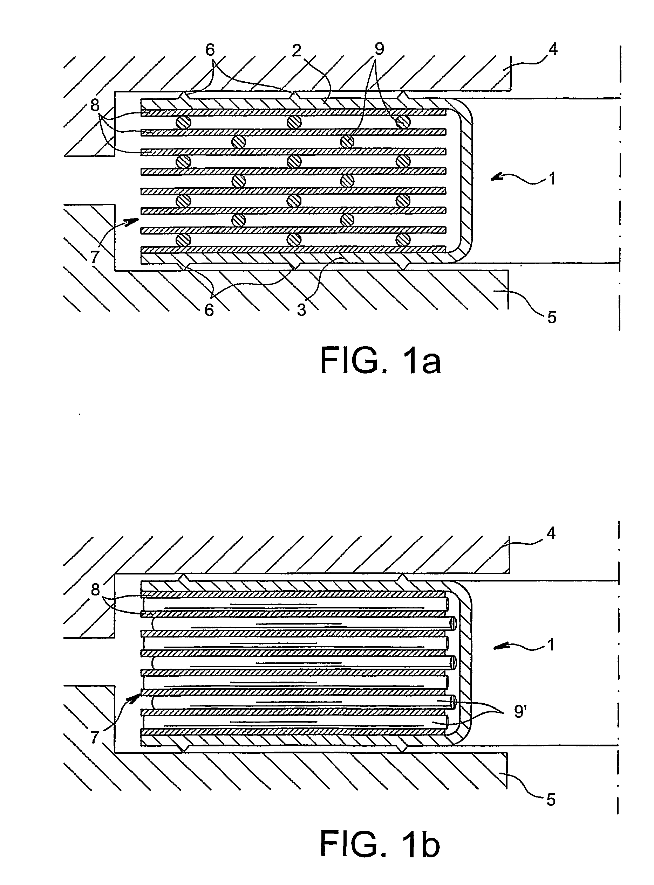

Le premier mode de réalisation est représenté à la figure 1a ; il est constitué d'une enveloppe métallique 1 présentant, sur l'extérieur de deux faces d'appui 2 et 3 établies pour assurer l'étanchéité entre deux brides 4 et 5, des saillies 6 dont les arêtes touchent les brides 4 et 5 de manière à concentrer l'effort de serrage. Il est aussi constitué d'une structure interne 7 formée de plusieurs lames de ressort 8 flexibles en appui sur des plots intermédiaires 9 qui les séparent.

L'âme du joint est donc composée de couches alternées des lames 8 et des plots 9 dans une direction verticale s'étendant d'une des brides 4 à l'autre 5. Les plots 9 forment un réseau en quinconce, étant répartis en rangées verticales dans lesquelles ils occupent un espace sur deux entre les lames 8. Si on parcourt le joint dans une direction normale à l'axe de symétrie du joint global, horizontale et parallèle aux brides 4 et 5 entre deux lames 8, on arrive de même à un plot 9 à toutes les deux rangées verticales qu'on croise.

Le joint de la figure 1a a une structure qualifiée de radiale, où les plots 9 sont des anneaux de différents rayons et concentriques. Pour contribuer au mieux à la pression de serrage, les rangées, au nombre de trois sur la figure, où les plots 9 touchent des lames 8 extrêmes, en appui sur leur autre face avec les faces d'appui 2 et 3, auront les mêmes diamètres que les saillies 6 de façon à s'étendre sous elles, et les autres rangées de plots 9 s'étendront à mi-distance des saillies 6. Les deux lames 8 extrêmes sont en contact avec l'enveloppe métallique 1. Ce contact présente une liaison plane-glissante.

Selon la rigidité des deux lames 8 extrêmes qui ont en particulier le rôle de répartition de l'effort de réaction de la structure lamellaire sur l'enveloppe métallique 1, les plots pourront avoir d'autres positions.

Le joint pourra aussi avoir une structure qualifiée d'orthoradiale, où les plots 9' sont rayonnants, qu'on illustre à la figure 1b. Leur agencement d'après une coupe tangentielle exécutée à travers le joint est encore en quinconce et analogue à celui de la figure 1a.

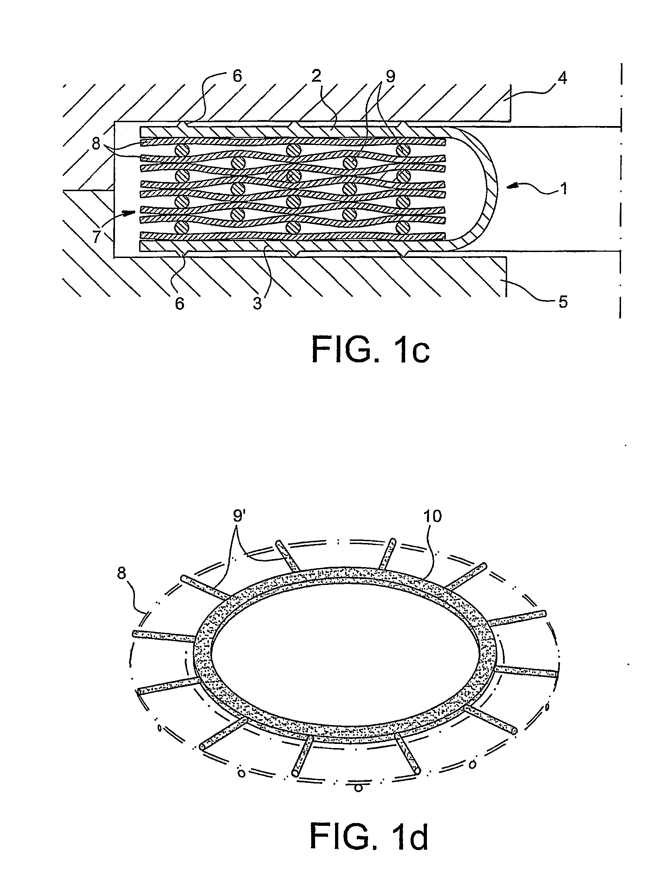

Le fonctionnement des deux structures est sensiblement le même. L'écrasement du joint se traduit par des flexions alternées des lames 8 entre les plots 9 ou 9' décalés. Les lames 8 se déforment jusqu'à venir au maximum en contact mutuel entre des paires de plots 9 ou 9', à l'état de la figure 1c qui montre la disparition des vides entre les lames 8 alternant avec les plots 9 dans chacune des rangées verticales. Cette âme de joint dont la raideur varie selon la distance entre les plots garantit un bon maintien de l'effort de serrage du fait de la sollicitation des la lames en deçà de leur limite élastique à haute température qui n'engendre pas de relaxation de la matière.

Le matériau des lames doit être choisi d'après la température rencontrée et la limite élastique. On pourra préconiser les super-alliages à base de nickel, les alliages à dispersions d'oxydes, ou des céramiques en raison de la faible déformation à laquelle les lames 8 seront soumises. Les plots 9 ou 9' pourront être construits dans les mêmes matières. Enfin, le matériau constitutif de l'enveloppe externe 1 sera choisi aussi pour résister à la température, et en fonction du fluide à étancher. Les alliages à base de nickel ou de fer pourront être utilisés en raison de leur aptitude à former une couche d'oxyde qui arrête la corrosion à haute température.

Une réalisation précise de l'invention peut comprendre trois saillies 6 sur chacune des faces d'appui 2 et 3 et huit lames flexibles 8. Les plots 9 peuvent être composés de fils à section circulaire. La structure interne peut être réalisée suivant de nombreuses variantes dont le choix sera fait en fonction de critères économiques et techniques selon les dimensions de la section du joint ou son diamètre nominal. Le choix entre les structures radiales et orthoradiales sera à considérer en fonction de critères dimensionnels de mécanique suivant les contraintes acceptables par le matériau utilisé.

Dans tous les cas, les plots 9 ou 9' d'une même couche peuvent être unis entre eux par des barrettes. Dans le cas orthoradial, ces barrettes pourraient consister en des anneaux ou un anneau unique 10 s'étendant à côté des lames 8 et les unissant, qu'on représente à la figure 1d.

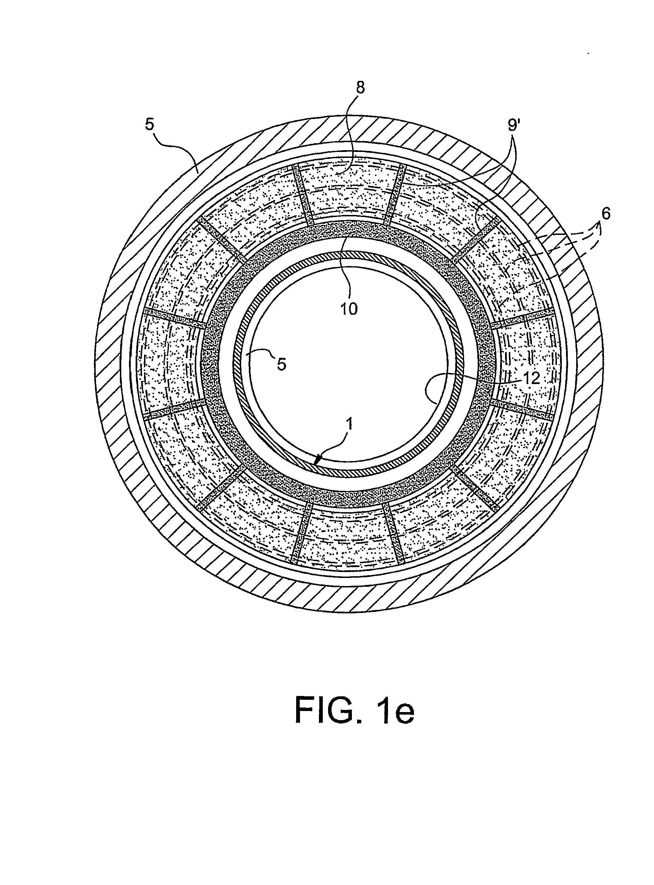

Cette figure, et plus encore la figure 1e, seront l'occasion de confirmer certains aspects généraux du joint : il est globalement circulaire autour d'un alésage 12 ménagé à travers les brides 4 et 5 ; l'enveloppe 1 a une section en U fermée vers l'intérieur du cercle et l'alésage 12 mais ouverte vers l'extérieur ; les lames 8 sont circulaires et à contour fermé, ce qui leur donne une bonne raideur aux déformations en flexion ; elles sont aussi distinctes entre elles, étant parfaitement plates et à la surface uniforme à l'état relâché du joint ; les saillies 6 sont linéaires et plus précisément circulaires, et s'étendent tout autour de l'alésage 12 ; quoique ceci ne soit pas représenté, on comprendra que les plots 9 de la structure radiale de la figure 1a auraient les mêmes emplacements que les saillies 6 dans une représentation semblable à la figure le.

Quelques autres réalisations de l'invention seront maintenant décrites.

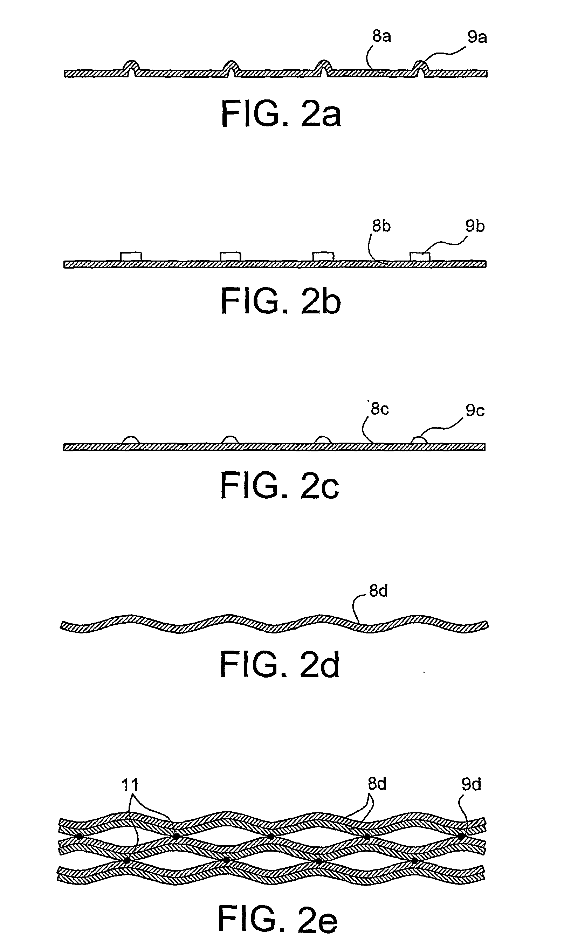

La figure 2a montre en coupe une lame métallique 8a dont les appuis 9a ne sont pas réalisés grâce à des plots séparés mais à des pliures peu distantes de la lame elle-même. Cette variante peut être exploitée indistinctement en version radiale ou orthoradiale.

La figure 2b montre en coupe une lame en céramique 8b dont les appuis 9b sont réalisés grâce à des plots également en céramique mais collés sur la lame. Cette version semble intéressante surtout pour la structure orthoradiale.

L'empilage des lames représenté fig 2a, 2b, 2c, est réalisé par des contacts entre les appuis (pliure, plots en céramique, cordon de métal d'apport) décalés entre deux lames successives.

La figure 2c montre en coupe une lame métallique 8c dont les appuis 9c sont réalisés par des chargements tels des cordons de métal d'apport déposés par un appareil de soudage à intervalles réguliers. Cette variante peut être utilisée indistinctement en version radiale ou orthoradiale.

L'empilage des lames représenté sur les figures 2a, 2b, 2c, est réalisé par des contacts entre les appuis (pliure, plots en céramique, cordon de métal d'apport) décalés entre deux lames successives.

La figure 2d montre en coupe une lame métallique ondulée 8d qui peut fonctionner de façon similaire aux lames précédentes mais qui offre une possibilité d'assemblage supplémentaire par combinaisons multiples pour faire varier la raideur, comme le montre la figure 2e qui illustre un assemblage des lames 8d deux par deux. Cette structure ondulée peut également être exploitée en version orthoradiale ou radiale, selon que les ondulations sont circulaires ou radiales. Dans ce genre de mode de réalisation, les appuis 9d sont réalisés par des contacts entre les crêtes opposées d'ondulations de lames voisines. Quoique la déformation des lames 8d soit différente de celle des modes de réalisations précédents, puisqu'elles s'aplatissent sous l'effort au lieu de se gauchir, le fonctionnement du joint sera le même avec un tel mode de réalisation. Des précautions doivent être prises pour éviter tout glissement des lames 8d en direction tangentielle. Elles pourront ainsi être fixées ensemble aux appuis, par des soudures 11, des rivets, etc.

## Revendications

1. Joint d'étanchéité comprenant une enveloppe (1) externe métallique et une structure interne élastique, dans lequel la structure interne est composée de lames (8 ; 8a, b, c, d) flexibles superposées et séparées par des appuis (9 ; 9a, b, c, d), **caractérisé en ce que** les appuis situés d'un côté et de l'autre des lames sont décalés en quinconce de sorte à être répartis en rangées où ils occupent un espace sur deux entre les lames et sont présents, dans une direction perpendiculaire aux rangées, à une rangée sur deux.

2. Joint d'étanchéité suivant la revendication 1, **caractérisé en ce que** certains des appuis, qui touchent à l'enveloppe, s'étendent sous des saillies (6) disposées sur une face externe de l'enveloppe.

3. Joint d'étanchéité suivant la revendication 2, **caractérisé en ce que** les appuis et les saillies sont linéaires.

4. Joint d'étanchéité suivant l'une quelconque des revendications 1 à 3, **caractérisé en ce que** les lames flexibles sont distinctes, à un contour fermé.

5. Joint d'étanchéité suivant l'une quelconque des revendications 1 à 4, **caractérisé en ce que** les lames flexibles sont uniformes et séparées par des plots intermédiaires qui réalisent les appuis.

6. Joint d'étanchéité suivant la revendication 5, **caractérisé en ce qu'**il comprend des anneaux qui portent chacun les plots situés entre une paire respective des lames flexibles.

7. Joint d'étanchéité suivant l'une quelconque des revendications 5 ou 6, **caractérisé en ce que** les lames flexibles sont en métal, céramique ou alliage à dispersion d'oxyde.

8. Joint d'étanchéité suivant l'une quelconque des revendications 1 à 4, **caractérisé en ce que** les lames flexibles sont ondulées, des contacts de paires d'ondulations réalisant les appuis.

9. Joint d'étanchéité suivant l'une quelconque des revendications 1 à 8, **caractérisé en ce que** les appuis sont répartis en rangées successives traversant le joint entre deux faces d'appui opposées de l'enveloppe, les appuis et des vides séparant les lames flexibles alternant dans chaque rangée et d'une rangée à l'autre.

10. Joint d'étanchéité suivant l'une quelconque des revendications 1 à 9, **caractérisé en ce que** les lames flexibles sont concentriques.

11. Joint d'étanchéité suivant l'une quelconque des revendications 1 à 10, **caractérisé en ce que** les lames flexibles sont circulaires et plates.

12. Joint d'étanchéité suivant l'une quelconque des revendications 1 à 11, **caractérisé en ce que** les appuis sont rayonnants.

13. Soit d'étanchéité suivant l'une quelconque des revendications 1 à 11, **caractérisé en ce que** les appuis sont des anneaux concentriques de différents rayons.

## Claims

1. Sealing joint comprising an external metal casing (1) and a flexible internal structure, wherein the internal structure is made of flexible strips (8, 8a, 8b, 8c, 8d), overlaid and separated by supports (9, 9a, 9b, 9c, 9d), **characterized in that** the supports located on either side of the strips are staggered so that they are distributed in rows in which they occupy every second space between the strips and are present, in a direction perpendicular to the rows, at every second row.

2. Sealing joint set forth in claim 1,
**characterised in that** some of the supports, which touch the casing, extend under the projections (6) positioned on an external surface of the casing.

3. Sealing joint set forth in claim 2,
**characterised in that** the supports and the projections are linear.

4. Sealing joint set forth in any one of claims 1 to 3, **characterised in that** the flexible strips are distinct, with a closed outline.

5. Sealing joint set forth in any one of claims 1 to 4, **characterised in that** the flexible strips are homogeneous and separated by intermediary blocks which act as the supports.

6. Sealing joint set forth in claim 5,
**characterised in that** it comprises rings each of which bears the blocks located between a respective pair of flexible strips.

7. Sealing joint set forth in any one of claims 5 or 6, **characterised in that** the flexible strips are made in metal, ceramic or alloy with oxide dispersion.

8. Sealing joint set forth in any one of claims 1 to 4, **characterised in that** the flexible strips are corrugated, the contact between pairs of waves creating the supports.

9. Sealing joint set forth in any one of claims 1 to 8, **characterised in that** the supports are laid out in successive rows crossing the joint through two support surfaces opposite the casing, the supports and the spaces separating the flexible strips alternating in each row and from one row to another.

10. Sealing joint set forth in any one of claims 1 to 9, **characterised in that** the flexible joints are concentric.

11. Sealing joint set forth in any one of claims 1 to 10, **characterised in that** the flexible strips are circular and flat.

12. Sealing joint set forth in any one of claims 1 to 11, **characterised in that** the supports radiate.

13. Sealing joint set forth in any one of claims 1 to 11, **characterised in that** the supports are concentric rings with differing radii.

## Patentansprüche

1. Dichtung mit einer metallischen Außenhülle (1) und einer elastischen Innenstruktur, bei der die Innenstruktur durch übereinanderliegende flexible Lamellen (8 ; 8a, b, c, d) gebildet wird, getrennt durch Stützen (9 ; 9a, b, c, d),
**dadurch gekennzeichnet, dass** die beiderseits der Lamellen befindlichen Stützen wechselständig so versetzt sind, dass sie reihenförmig verteilt sind, wobei sie einen von zwei Räumen zwischen den Lamellen und in einer zu den Reihen senkrechten Richtung eine von zwei Reihen besetzen.

2. Dichtung nach Anspruch 1, **dadurch gekennzeichnet, dass** einige der Stützen, welche die Hülle berühren, sich unter Vorsprüngen (6) erstrecken, die sich auf einer Außenseite der Hülle befinden.

3. Dichtung nach Anspruch 2, **dadurch gekennzeichnet, dass** die Stützen und die Vorsprünge linear sind.

4. Dichtung nach einem der Ansprüche 1 bis 3, **dadurch gekennzeichnet, dass** die flexiblen Lamellen unterschiedlich sind, mit einer geschlossenen Kontur.

5. Dichtung nach einem der vorangehenden Ansprüche 1 bis 4, **dadurch gekennzeichnet, dass** die flexiblen Lamellen gleichförmig und durch Zwischenstücke getrennt sind, welche die Stützen realisieren.

6. Dichtung nach Anspruch 5, **dadurch gekennzeichnet, dass** sie Ringe umfasst, von denen jeder die zwischen jeweils einem Paar der flexiblen Lamellen befindlichen Stücke trägt.

7. Dichtung nach einem der Ansprüche 5 oder 6, **dadurch gekennzeichnet, dass** die flexiblen Lamellen aus Metall, Keramik oder Oxiddispersionslegierung sind.

8. Dichtung nach einem der Ansprüche 1 bis 4, **dadurch gekennzeichnet, dass** die flexiblen Lamellen wellig sind, wobei Kontakte von Wellenpaaren die Stützen realisieren.

9. Dichtung nach einem der Ansprüche 1 bis 8, **dadurch gekennzeichnet, dass** die Stützen auf sukzessive Reihen verteilt sind, welche die Dichtung zwischen zwei entgegengesetzten Stützenseiten der Hülle durchqueren, wobei die die flexiblen Lamellen trennenden Stützen und die Hohlräume in jeder Reihe und von einer Reihe zur anderen abwechseln.

10. Dichtung nach einem der Ansprüche 1 bis 9, **dadurch gekennzeichnet, dass** die flexiblen Lamellen konzentrisch sind.

11. Dichtung nach einem der Ansprüche 1 bis 10, **dadurch gekennzeichnet, dass** die flexiblen Lamellen kreisförmig und eben sind.

12. Dichtung nach einem der Ansprüche 1 bis 11, **dadurch gekennzeichnet, dass** die Stützen strahlenförmig sind.

13. Dichtung nach einem der Ansprüche 1 bis 11, **dadurch gekennzeichnet, dass** die Stützen konzentrische Ringe mit unterschiedlichen Radien sind.
